# EUROPEAN PATENT APPLICATION

(11) **EP 2 908 429 A1**
(43) Date of publication of application: **19.08.2015**
(21) Application number: 15151879.2
(22) Date of filing: 21.01.2015
(51) Int. Cl.: H02P 29/02, H02H 7/085

(54) **Apparatus and method for detecting overcurrent in inverter**

(30) Priority: 24.01.2014 KR 20140008995
(71) Applicant: LSIS Co., Ltd., Anyang-si, Gyeonggi-do 431-080 (KR)
(72) Inventor: Choi, Gi Young, 431-848 Anyang-si, Gyeonggi-do (KR)
(74) Representative: Lang, Johannes

(57) **Abstract**

An apparatus for sensing an overcurrent is provided. The apparatus for sensing an overcurrent includes an inverter converting a direct current (DC) into an alternating current (AC) and supplying the AC to a motor to allow the motor to operate; a current sensing unit provided on a connection between the inverter and the motor and measuring an overcurrent of a control current value output from the inverter; and a control unit checking with the current sensing unit whether the overcurrent is sensed, and determining whether to operate the inverter, wherein the control unit creating an interrupt service routine (ISR) for checking overcurrent information and checks the overcurent information according to a created ISR, when the overcurrent is sensed through the current sensing unit.

## Description

### BACKGROUND

The present disclosure relates to an apparatus and method for detecting an overcurrent in an inverter.

In general, a system applying a device such as a motor often experiences an overcurrent due to jam (malfunction) or an overload.

In the case of a system using a weak current equal to or less than 3 A, a general current limitation circuit may block an overcurrent at the rising time of the overcurrent. However, in the case of a device in which an instantaneous driving current rises to 10 A or more, such as a brushless direct current motor of an automated telling machine, a typical current limitation circuit fails to cope with an instantaneous current rise and thus a device driver may be damaged.

Also, since the typical current limitation circuit employs an analog method, the accumulation of heat may occur depending on the current flowing in the current limitation circuit. When the current flowing in the current limitation circuit pulsates between current threshold values at very short time intervals, the disconnection and connection operations of the circuit are repetitively performed and thus there is a limitation in that heat due to an overcurrent is accumulated and a device driver is damaged.

### SUMMARY

Embodiments provide an apparatus and method for sensing an overcurrent in an inverter that senses the presence of the overcurrent and cuts off power by using a digital method.

In one embodiment, an apparatus for sensing an overcurrent includes an inverter converting a direct current (DC) into an alternating current (AC) and supplying the AC to a motor to allow the motor to operate; a current sensing unit provided on a connection between the inverter and the motor and measuring an overcurrent of a control current value output from the inverter; and a control unit checking with the current sensing unit whether the overcurrent is sensed, and determining whether to operate the inverter, wherein the control unit creating an interrupt service routine (ISR) for checking overcurrent information and checks the overcurent information according to a created ISR, when the overcurrent is sensed through the current sensing unit.

Since based on a current value obtained from a current sensor for sensing a current generated from the inverter, the overcurrent is sensed and power is cut off to stop the operation of the inverter, an embodiment has an effect in that it is possible to minimize a damage to a device driver and system due to the overcurrent.

### BRIEF DESCRIPTION OF THE DRAWINGS

Fig. 1 is a block diagram of an inverter overcurrent sensing apparatus employing an embodiment.
Fig. 2 is a flowchart of an inverter overcurrent sensing operation according to an embodiment.

### DETAILED DESCRIPTION OF THE EMBODIMENTS

Embodiments are described below in detail with reference to the accompanying drawings.

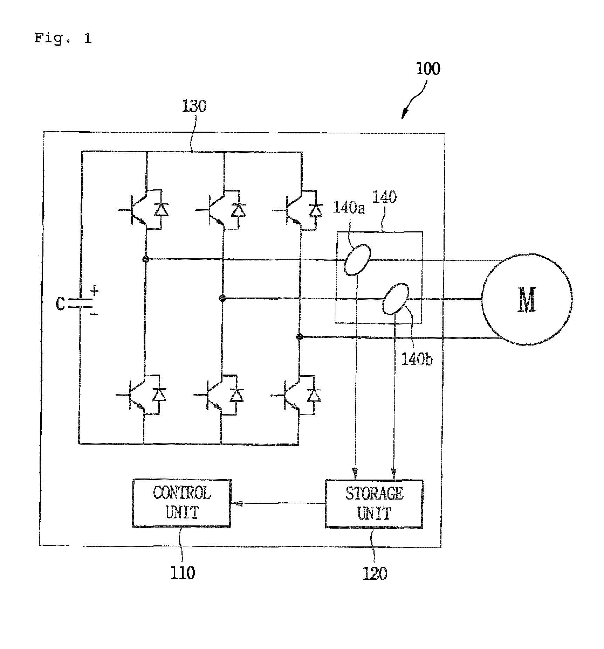

Fig. 1 is a block diagram of an inverter overcurrent sensing apparatus employing an embodiment.

Referring to Fig. 1, an overcurrent sensing apparatus 100 including an inverter for operating a motor according to an embodiment may include a control unit 110, a storage unit 120, an inverter 130, and a current sensing unit 140.

The control unit 110 may be connected to a torque sensor (not shown) and receive an electrical signal from the torque sensor to recognize generated torque. In addition, the control unit 110 calculates current control depending on generated torque and controls the inverter 130. That is, the control unit 110 uses the inverter 130 to supply a control current to a motor M.

A current sensing unit 140 for detecting the values of a-phase current sensor 141 and a b-phase current sensor 142 is provided at a connection between the inverter 130 and the motor M. In addition, the control unit 110 may use the current sensing unit 140 to check the presence and absence of an overcurrent.

The control unit 110 may sense the presence and absence of the overcurrent from the current value of each phase through the current sensing unit 140. In addition, when the overcurrent is sensed, the control unit 110 may generate an interrupt service routine (ISR) for checking a sensed phase and the level of the overcurrent.

In addition, according to the ISR due to the presence of the overcurrent, the control unit 110 may check the presence of the overcurrent and control the operation mode of the inverter.

The storage unit 120 may store information on a voltage and current applied to the motor M. Also, current information and overcurrent information obtained from the current sensors 140a and 140b on each phase of the current sensing unit 140 may be stored in the storage unit 120. Also, ISR generation information and ISR execution information may also be stored in the storage unit 120.

In addition, information on how the control unit 110 has controlled the inverter according to a result of sensing the overcurrent may also be stored in the storage unit 120.

The inverter 130 converts a direct current (DC) into an alternating current (AC) and the AC obtained through conversion is supplied to the motor M. Thus, the inverter 130 may be a power supply device from the point of view of the motor M.

In addition, the inverter 130 operates according to the control of the control unit 110. That is, when a control current is received from the control unit 110, the inverter 130 switches a switching element according to the control current so that a supply current to be supplied to the motor M varies to control the operation of the motor M.

The current sensing unit 140 may be attached to at least two of phase connections of the inverter. As an example of the current sensing unit 140, two current sensors, the a-phase current 140a and the b-phase current sensor 140b are provided. The current sensing unit 140 may obtain current values by the current sensors 140a and 140b on phase connections.

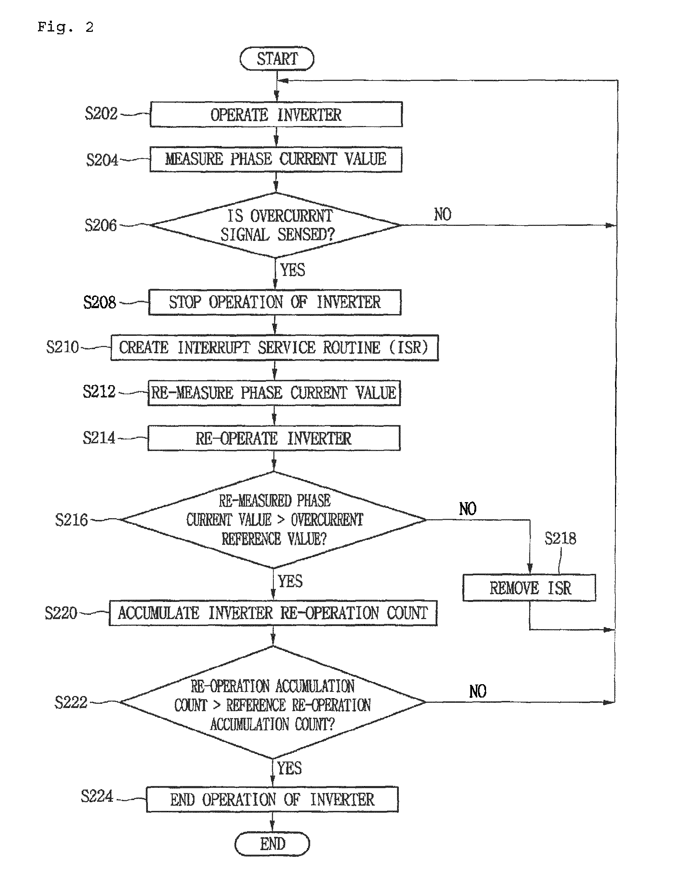

The overcurrent sensing operation of the inverter according to an embodiment is described in detail based on the configuration according to an embodiment and with reference to Fig. 2.

Fig. 2 is a flowchart of an inverter overcurrent sensing operation according to an embodiment.

Referring to Fig. 2, when a control current is transmitted from the control unit 110 to the inverter 130, the inverter 130 operates switching elements according to the control current. In addition, an AC current is supplied to the motor M by the operation of the inverter.

In addition, the control unit 110 measures a phase current value through the current sensing unit 140 on the AC supplied from the inverter 130 to the motor M in step S204.

In addition, the control unit 110 may determine based on a measured phase current value whether the phase current value is an overcurrent signal in step S206. When it is determined that the measured phase current value is the overcurrent exceeding a reference current value, the control unit 110 may stop an inverter operation mode in step S208.

When the inverter operation mode is stopped, the control unit 110 generates the ISR for sensing a phase having the overcurrent and a level of the overcurrent in step S210. In order to check the overcurrent sensed in one cycle T, the ISR routine may re-measure the overcurrent at an interval shorter than one cycle, e.g., at an interval including several micro seconds (e.g., 10 µs) before and after the presence of the overcurrent.

The control unit 110 re-measures a phase current value for the period of ISR generated. In this case, it is possible to re-measure the current of each phase in step S212.

By using such a method, it is possible to determine an overcurrent by using software before re-operating the inverter and thus reduce sensitivity to wrong detection. In addition, when a comparator is not provided for each phase, phase based detection is possible by using the method.

The control unit 110 may re-measure a phase current value and re-operate the inverter in step S214 when the re-measuring is completed.

That is, by generating an ISR having several micro seconds after the inverter stops due to the generation of an overcurrent trip signal, a phase current is sensed in the routine and the inverter re-operates.

In addition, it is determined by using software whether a set overcurrent reference value is exceeded. That is, the control unit 110 may determine whether a re-measured phase current value exceeds the overcurent reference value (reference current value) in step S216.

That is, the control unit 110 may determine whether the re-measured current value of each phase exceeds a preset overcurent reference value.

When a re-measured phase current value does not exceed (is equal to or less than) the overcurrent reference value, the control unit 110 may remove the ISR and perform a normal state inverter operation mode in step S218.

On the contrary, when as a result of determination, the re-measured phase current value exceeds the overcurrent reference value, the control unit 110 may accumulate stop and re-operation counts due to the stop of the inverter operation by the presence of the overcurrent and the ISR. That is, when the inverter that has stopped due to the overcurrent re-operates, the control unit 110 may accumulate and refer to the re-operation count when the stop and re-operation of the inverter due to the overcurrent appearing later is determined.

The control unit 110 may accumulate the re-operation count of the inverter and determine whether an accumulation count exceeds a reference re-operation accumulation count in step S222.

When the accumulation count of the stop and re-operation by the overcurrent sensing of the inverter 130 exceeds a reference re-operation accumulation count, the control unit 110 may end the operation of the inverter 130 to block a current entering in step S224.

The above descriptions are only examples of the technical spirit of the present invention, so a person skilled in the art may implement various modifications and variations without departing from the spirit and scope of the present invention.

## Claims

1. An apparatus for sensing an overcurrent, the apparatus comprising:
an inverter converting a direct current (DC) into an alternating current (AC) and supplying the AC to a motor to allow the motor to operate;
a current sensing unit provided on a connection between the inverter and the motor and measuring an overcurrent of a control current value output from the inverter; and
a control unit checking with the current sensing unit whether the overcurrent is sensed, and determining whether to operate the inverter,
wherein the control unit creating an interrupt service routine (ISR) for checking overcurrent information and checks the overcurent information according to a created ISR, when the overcurrent is sensed through the current sensing unit.

2. The apparatus according to claim 1, wherein the current
sensing unit is a current sensor provided at each of two of phases of connections of the inverter.

3. The apparatus according to claim 1, wherein the control unit switches an operation mode of the inverter in operation to a stop mode when the overcurrent is sensed.

4. The apparatus according to claim 3, wherein the control unit switches the operation mode of the inverter to the stop mode and creates the ISR.

5. The apparatus according to claim 1, wherein the control unit allows a created ISR to be performed at intervals including critical micro seconds before and after the overcurrent is sensed.

6. The apparatus according to claim 5, wherein the control unit re-measures a phase current value for a corresponding interval when the ISR is created, determines whether a re-measured phase current value exceeds an overcurrent reference value, and controls an inverter operation mode according to a result of determination.

7. The apparatus according to claim 6, wherein the control unit re-operates the inverter when re-measuring on the phase current value is completed while the ISR is performed.

8. The apparatus according to claim 7, wherein the control unit accumulates a re-operation count of the inverter when the measured phase current value exceeds an overcurrent reference value, and ends an operation of the inverter when a re-operation accumulation count exceeds a reference re-operation accumulation count.

9. The apparatus according to claim 7, wherein the control unit ends the ISR when the re-measured phase current value is equal to or less than an overcurrent reference value.
